# EUROPEAN PATENT APPLICATION

(11) **EP 4 398 537 A1**
(43) Date of publication of application: **10.07.2024**
(21) Application number: 22863279.0
(22) Date of filing: 24.08.2022
(51) Int. Cl.: H04L 43/10

(54) **METHOD FOR DETECTING PUBLIC NETWORK FORWARDING DEVICE, PUBLIC NETWORK FORWARDING DEVICE, AND STORAGE MEDIUM**

(30) Priority: 03.09.2021 CN 202111032801
(71) Applicant: ZTE Corporation, Shenzhen, Guangdong 518057 (CN)
(72) Inventor: QIAN, Xin, Shenzhen, Guangdong 518057 (CN)
(74) Representative: Pennacchio, Salvatore Giovanni
(86) International application number: PCT/CN2022/114622
(87) International publication number: WO 2023/030141

(57) **Abstract**

Embodiments of the present disclosure relate to the technical field of communications. Provided are a method for detecting a public network forwarding device, and a public network forwarding device and a storage medium. In the embodiments of the present disclosure, the method for detecting a public network forwarding device includes: receiving a TRACE message performed by outer layer encapsulation based on a preset protocol, and analyzing an HL value from the outer layer encapsulation; analyzing the TRACE message if the HL value indicates that the last hop has been reached, and acquiring a source IP carried in the TRACE message; generating a response message, setting a destination IP in the response message as the source IP in the TRACE message, and setting a source IP in the response message as an IP of a public network forwarding device; and performing outer layer encapsulation on the response message based on the preset protocol, respectively setting the source IP and the destination IP in the outer layer encapsulation of the response message as the source IP and a destination IP in the outer layer encapsulation of the TRACE message, and sending the response message performed by the outer layer encapsulation. Therefore, a sending end of the TRACE message can detect the public network forwarding device, and a clear data transmission topological graph is established.

## Description

### Technical Field

Embodiments of the present disclosure relate to the technical field of communications, and in particular to a method for detecting a public network forwarding device, and a public network forwarding device and a storage medium.

### Background

In an Internet Protocol Address (IP address) tunnel forwarding network, a Customer Edge (CE) in a private network is connected to a service Provider Edge (PE), and accesses to a public network through the PE. Providers (P) of a service provider network are deployed, as public network forwarding devices, among the PEs in the public network. The CE expects to acquire an IP address of the forwarding device in the public network by sending a private network IP address of a remote CE to a TRACEROUTE (TRACE) message, so as to achieve a purpose of establishing a clear network topological graph for data transmission between the CE and the remote CE.

However, a response message requested by a private network TRACE message can only be sent to a head node of a public network IP tunnel, which is the PE connected to a sending end (source CE) of the TRACE message, but cannot reach the source CE. The source CE cannot receive the response message, i.e. cannot detect a public network forwarding device, and thus it is difficult to establish a clear data transmission network topological graph.

### Summary

Embodiments of the present disclosure provides a method for detecting a public network forwarding device, and a public network forwarding device and a storage medium, to enable a sending end of a TRACE message to detect a public network forwarding device, so as to establish a clear data transmission topological graph between private networks.

An embodiment of the present disclosure provides a method for detecting a public network forwarding device. The method is applied to a public network forwarding device and includes the following operations.

A TRACE message performed by outer layer encapsulation based on a preset protocol is received, and a Hop Limit (HL) value is analyzed from the outer layer encapsulation of the TRACE message, where the preset protocol is a transmission protocol that is supported by a public network where a public network forwarding device is located; the TRACE message is analyzed if the HL value indicates that the last hop has been reached, and a source Internet Protocol (IP) carried in the TRACE message is acquired; a response message is generated, a destination IP in the response message is set as the source IP in the TRACE message, and a source IP in the response message is set as an IP of the public network forwarding device; and outer layer encapsulation is performed on the response message based on the preset protocol, the source IP and the destination IP in the outer layer encapsulation of the response message are respectively set as the source IP and a destination IP in the outer layer encapsulation of the TRACE message, and the response message performed by the outer layer encapsulation is sent.

An embodiment of the present disclosure further provides a public network forwarding device, which includes a receiving module, a first analysis module, a second analysis module, an encapsulation module, and a sending module.

The receiving module is configured to receive a TRACE message performed by outer layer encapsulation based on a preset protocol. The first analysis module is configured to analyze an HL value from the outer layer encapsulation of the TRACE message, where the preset protocol is a transmission protocol that is supported by a network where the public network forwarding device is located. The second analysis module is configured to analyze the TRACE message when the HL value indicates that the last hop has been reached, and acquire a source IP carried in the TRACE message. The message generation module is configured to generate a response message, set a destination IP in the response message as the source IP in the TRACE message, and set a source IP in the response message as an IP of the public network forwarding device. The encapsulation module is configured to perform outer layer encapsulation on the response message based on the preset protocol, and respectively set the source IP and the destination IP in the outer layer encapsulation of the response message as the source IP and a destination IP in the outer layer encapsulation of the TRACE message. The sending module is configured to send the response message performed by the outer layer encapsulation.

An embodiment of the present disclosure further provides a public network forwarding device, which includes: at least one processor; and a memory communicatively connected to the at least one processor. The memory stores an instruction executable by the at least one processor. The instruction is executed by the at least one processor, to enable the at least one processor to execute the method for detecting a public network forwarding device.

An embodiment of the present disclosure further provides a computer-readable storage medium storing a computer program. The method for detecting a public network forwarding device is implemented when the computer program is executed by a processor.

In the embodiments of the present disclosure, for any public network forwarding device, when the HL value in the outer layer encapsulation of the TRACE message indicates that the last hop has been reached, the TRACE message at an inner layer is analyzed to acquire the source IP carried in the TRACE message, such that the destination IP in the generated response message may be set as the source IP in the TRACE message. Meanwhile, outer layer encapsulation is performed on the response message based on the preset protocol, such that the response message can be transmitted and fed back, based on the preset protocol, to the destination IP in the response message, i.e. the source IP in the TRACE message. Since the source IP in the TRACE message is the IP of the sending end of the TRACE message, the sending end of the TRACE message may analyze, from the response message, i.e. the IP of the public network forwarding device, such that the sending end of the TRACE message detects the public network forwarding device.

### Brief Description of the Drawings

One or more implementations are exemplified by the figures in the corresponding drawings, and these exemplary descriptions do not constitute limitations of the implementations. Elements with same reference numerals in the drawings are denoted as similar elements. Unless otherwise stated, the figures in the drawings do not constitute a scale limitation.
Fig. 1 is a schematic diagram of a device connection structure including a public network forwarding device according to an embodiment of the present disclosure.
Fig. 2 is a flowchart of a method for detecting a public network forwarding device according to an embodiment of the present disclosure.
Fig. 3 is a schematic diagram of a device connection structure including a public network forwarding device according to another embodiment of the present disclosure.
Fig. 4 is a schematic structural diagram of a public network forwarding device according to an embodiment of the present disclosure.
Fig. 5 is a schematic structural diagram of a public network forwarding device according to another embodiment of the present disclosure.

### Detailed Description of the Embodiments

In order to make objectives, technical solutions, and advantages of embodiments of the present disclosure clearer, the embodiments of the present disclosure will be described in detail below with reference to the drawings. However, it is to be understood by those skilled in the art that, in each embodiment of the present disclosure, many technical details are provided for readers to better understand the embodiments of the present disclosure. However, even without these technical details and various changes and modifications based on the following implementations, the technical solutions claimed in the embodiments of the present disclosure may also be realized.

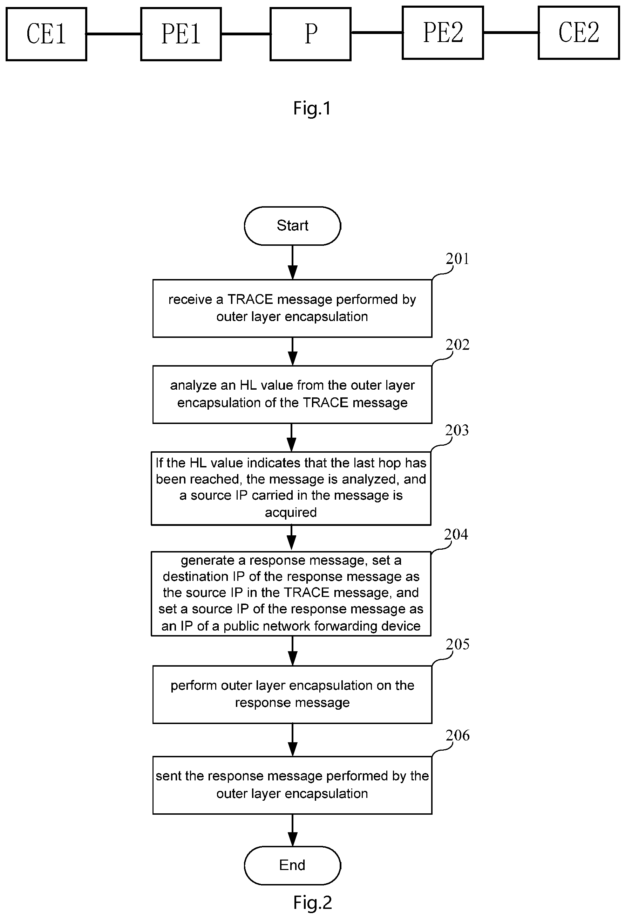

An embodiment of the present disclosure relates to a method for detecting a public network forwarding device. The method is applied to a public network forwarding device. A connection structure of devices in an IP tunnel forwarding network such as the public network forwarding device, a Customer Edge (CE), and a service Provider Edge (PE) involved in this implementation is shown in Fig. 1. A first CE (represented by CE1 in the figure) accesses to a public network through a first PE (represented by PE1 in the figure), and a remote second CE (represented by CE2 in the figure) accesses to the public network through a second PE (represented by PE2 in the figure). Providers (represented by P in the figure) of a service provider network are deployed, as public network forwarding devices, between the PE1 and the PE2.

In the IP tunnel forwarding network, when a private network TRACE message is transmitted to a head node, i.e. the PE, of a public network IP tunnel, the PE performs outer layer encapsulation on the private network TRACE message, and the outer layer encapsulation is based on a communication protocol of the public network. Therefore, the private network TRACE message includes two layers of IP addresses when being transmitted in the public network: the outer layer is tunnel encapsulation information, and a source IP address and a destination IP address encapsulated by the outer layer identify the public network tunnel; and the inner layer is a private network IP, and the source IP address and the destination IP address are private network addresses of the TRACE message. A response message requested by the private network TRACE message, by default, is an internet control message protocol (error message in short) generated through triggering due to exhaustion of HL of the outermost IP layer of the TRACE message. The response error message is returned by a route pointed by a source IP at the outer layer of the private network TRACE message, i.e. a destination IP of the response error message is generally set as a source IP at the outer layer of the private network TRACE message.

Due to a feedback mechanism of the response message, the response message can only be sent to the head node of the public network IP tunnel, which is the PE connected to a sending end (source CE) of the TRACE message, but cannot reach the source CE. The source CE cannot receive the response message, i.e. cannot detect a public network forwarding device, and thus it is difficult to establish a clear data transmission network topological graph.

In this implementation, the public network forwarding device receives the TRACE message performed by outer layer encapsulation based on the preset protocol, and an HL value is analyzed from the outer layer encapsulation of the TRACE message; the preset protocol is a transmission protocol that is supported by the public network where the public network forwarding device is located; the TRACE message is analyzed if the HL value indicates that the last hop has been reached, and the source IP carried in the TRACE message is acquired; the response message is generated, the destination IP in the response message is set as the source IP in the TRACE message, and the source IP in the response message is set as the IP of the public network forwarding device; and outer layer encapsulation is performed on the response message based on the preset protocol, the source IP and the destination IP in the outer layer encapsulation of the response message are respectively set as the source IP and the destination IP in the outer layer encapsulation of the TRACE message, and the response message performed by the outer layer encapsulation is sent.

Implementation details of the method for detecting a public network forwarding device in this embodiment are described below. The following is intended only to facilitate an understanding of the implementation details of the solution, and is not necessary for the implementation of the solution. A specific flow is shown in Fig. 2, and may include the following steps.

At S201, a public network forwarding device receives a TRACE message performed by outer layer encapsulation.

In this step, the public network forwarding device receives the TRACE message, and the TRACE message is received from a first side adjacent network device. The first side adjacent network device here may be another public network forwarding device or a PE1. The TRACE message is performed by outer layer encapsulation based on a preset protocol, and the preset protocol involved here is a transmission protocol that is supported by a public network where the public network forwarding device is located.

The preset protocol here includes a preset protocol in the following steps, which may be one of an IPv6 Segment Routing (SRV6) protocol, a Virtual extensible Local Area Network (VxLAN) protocol, and a General Routing Encapsulation (GRE) protocol.

At S202, the public network forwarding device analyzes an HL value from the outer layer encapsulation of the TRACE message.

In an embodiment, HL is used for representing the number of remaining nodes that the message passes through, and generally, the number of routers that the message may pass through is set by setting the HL value. The outer layer encapsulation of the TRACE message includes the HL value. In this step, the public network forwarding device analyzes the HL value from the outer layer encapsulation of the TRACE message, so as to determine, according to the HL value, that the TRACE message is analyzed in the following steps, or to forward the TRACE message.

At S203, if the HL value indicates that the last hop has been reached, the public network forwarding device analyzes the message, and acquires a source IP carried in the message.

In an embodiment, if the public network forwarding device analyzes the HL value from the outer layer encapsulation of the TRACE message, in an example, it may be predetermined that the HL value of 1 indicates the last hop. If it is detected that the HL value is 1, it indicates that the TRACE message has been transmitted to the last hop, and then the public network forwarding device analyzes the TRACE message and acquires the source IP carried in the message. The source IP carried in the TRACE message is a sending end of the TRACE message. In an example, the TRACE message is sent by a first CE, such that the source IP carried in the TRACE message is an IP address of the first CE. If the TRACE message is sent by a first PE, the source IP carried in the TRACE message is an IP address of the first PE.

In an example, the public network forwarding device may further be configured to be in different modes. If the HL value indicates that the last hop has been reached and the public network forwarding device is configured to support a mode of analyzing an inner layer message, the public network forwarding device analyzes the TRACE message, and acquires the source IP carried in the TRACE message.

In an embodiment, the public network forwarding device is provided with a mode configuration switch. If the configuration switch is on, i.e. the public network forwarding device is configured to support the mode of analyzing the inner layer message, and the HL value indicates that the TRACE message has been transmitted to the last hop, the TRACE message is analyzed, and the source IP carried in the TRACE message is acquired. If the configuration switch is not on, the public network forwarding device cannot deeply analyze the TRACE message.

At S204, the public network forwarding device generates a response message.

In an embodiment, the public network forwarding device generates the response message, and sets a destination IP and a source IP for the response message. The source IP in the response message is set as an IP address of a sending end of the response message, which is an IP address of the public network forwarding device. The destination IP in the response message is set as the source IP in the TRACE message, which is an IP address of the sending end of the TRACE message, so as to return the response message to the sending end of the TRACE message, i.e. the sending end of the TRACE message acquires the IP address of the public network forwarding device.

At S205, the public network forwarding device performs outer layer encapsulation on the response message.

In an embodiment, the public network forwarding device generates the response message and then performs outer layer encapsulation on the response message. In addition, the outer layer encapsulation is based on the preset protocol. The public network forwarding device sets a source IP and a destination IP for the outer layer encapsulation of the response message. The source IP of the outer layer encapsulation of the response message is set as a source IP in the outer layer encapsulation of the TRACE message, and the destination IP of the outer layer encapsulation of the response message is set as a destination IP in the outer layer encapsulation of the TRACE message.

In this step, setting the source IP and the destination IP of the outer layer encapsulation of the response message to be the same as that of the TRACE message is to make the response message continuously transmitted forward to a remote second side adjacent network device. Herein, the HL value of the outer layer encapsulation of the response message is set to 255, such that the public network forwarding device does not analyze the response message when receiving the response message, but to forward transmit the response message.

At S206, the public network forwarding device sends the response message performed by outer layer encapsulation. In this step, the public network forwarding device sends the response message performed by outer layer encapsulation to the second side adjacent network device. The second side adjacent network device here may be another public network forwarding device or a PE2.

After the response message performed by outer layer encapsulation is sent to the second side adjacent network device, if the second side adjacent network device receives the response message performed by the outer layer encapsulation again based on the preset protocol, the public network forwarding device may further forward the response message to the first side adjacent network device.

In an embodiment, after the response message is sent to the second side adjacent network device, the second side adjacent network device sends the response message to the first side adjacent network device through a public network tunnel, and in this case, the public network forwarding device receives, from the second side adjacent network device, the response message performed by the outer layer encapsulation again based on the preset protocol, so as to send the response message to the first side adjacent network device.

In another example, after the HL value is analyzed from the outer layer encapsulation of the TRACE message, it is detected that the HL value is not 1, i.e. it indicates that the TRACE message does not reach the last hop, and no analysis is performed on the TRACE message. Then outer layer encapsulation is performed on the TRACE message again based on the preset protocol, specifically including setting the source IP and the destination IP of the outer layer encapsulation. Further, 1 is subtracted from the HL value in the outer layer encapsulation during re-performing of the outer layer encapsulation; and the TRACE message that is re-performed by outer layer encapsulation is sent to the second side adjacent network device.

In a specific example, a schematic diagram of a connection structure between the CE1 and the CE2 is shown in Fig. 1. The CE1 sends the TRACE message to the CE2 for four times to detect PE1, P, PE2, and CE2 nodes in a data transmission path, so as to establish a network topological graph for data transmission between the CE1 and the CE2. Four rounds of detection processes are specifically introduced below.

In the first round of detection, the CE1 sends an Internet Protocol version 4 (IPv4) TRACE message to the CE2, then the destination IP of the TRACE message is set as an IP address of the CE2, and the source IP is set as an IP address of the CE1. Furthermore, Time To Live (TTL) of the TRACE message is set to 1, such that the response error message can be obtained when the TRACE message is transmitted to a first node on the transmission path, and the CE1 can acquire the IP of the PE1 from the response error message.

After the PE1 receives the message sent by the CE1, it is detected that the TTL is 1, such that an ICMP error response message is generated. A source IP of the error response message is set as the IP of the sending end of the response message, i.e. an IP address of the PE1. In addition, in order to be able to return the error response message to the CE1 to make the CE1 acquire the IP of the PE1, a destination IP of the error response message is set as an IP address of the CE1. The PE1 sends the response message to the CE1 according to IP address query private network routing of the CE1.

The CE1 receives the response message sent by the PE1. At this point, the CE1 completes the detection of the PE1.

In the second round of detection, the CE1 sends the IPv4 TRACE message to the CE2, a destination IP is set as an IP address of the CE2, and a source IP is set as the IP address of the CE1. Furthermore, TTL of the TRACE message is set to 2, such that the response error message can be obtained when the TRACE message is transmitted to a second node on the transmission path, and the CE1 can acquire the IP of the P from the response error message.

After the PE1 receives the TRACE message sent by the CE1, it is detected that the TTL is 2. In order to make a private network message transmitted in a public network, the TRACE message needs to be performed by SRv6 encapsulation, and then is forwarded to the remote PE2. A specific encapsulation behavior includes: first, subtracting 1 from the received TRACE message as the TRACE message passes through one node. Then an IPv6 header is encapsulated in the outer layer of the TRACE message, and HL in the IPv6 header is set as an inner layer TTL, which is 1. After outer layer encapsulation is completed, the PE1 continues to forward the message along a public network path according to SRv6 tunnel forwarding information, i.e. forwarding the message to the P.

The P receives the message forwarded by the PE1, the HL in the outer layer IPv6 header is detected to be 1, indicating that the last hop has been reached, then the P analyzes the message, the inner layer message is identified as the TRACE message, and the inner layer TTL is detected to be 1, such that the ICMP error response is generated. The source IP of the error response message is set as the IP of the sending end of the response message, i.e. an IP address of the P. In addition, in order to be able to return the error response message to the CE1 to make the CE1 acquire the IP of the P, the destination IP of the error response message is set as the IP address of the CE1. P encapsulates an IPv6 header same as that of the TRACE message for an outer layer of the error message, such that the error message can be continuously transmitted forward in an SRv6 tunnel. At the same time, the HL in the outer layer IPv6 header is modified to 255, such that the response message is not analyzed, but is transmitted forward when other public network forwarding devices receive the response message. P continues to forward the message in the SRv6 tunnel according to message outer layer IPv6 header information, i.e. sending the message to the PE2.

After receiving the message sent by the P, the PE2 strips an outer layer SRv6 header, and queries private network routing for forwarding according to an inner layer response message, i.e. the message is sent to the destination IP (the IP of the CE1) of the response message. During forwarding, the outer layer of the response message encapsulates a new IPv6 header according to a public network SRv6 tunnel from the PE2 to the PE1, so as to forward the message to the PE1, and the HL in the outer layer IPv6 header is set to 255 to make the message not analyzed by the P in the transmission path but transmitted forward.

After receiving the message returned by the PE2, the P forwards the message to the PE1 according to the IPv6 header encapsulated at the outer layer of the message.

After receiving the message forwarded by the P, the PE1 strips the outer layer IPv6 header, identifies the destination IP of the inner layer response message as the address of the CE1, and forwards the message to the CE1 by querying private network routing.

The CE1 receives the message forwarded by the PE1. At this point, the CE1 completes the detection of the P.

In the third round of detection, the CE1 sends the IPv4 TRACE message to the CE2, a destination IP is set as an IP address of the CE2, and a source IP is set as the IP address of the CE1. Furthermore, TTL is set to 3, the reason is similar to those in the first and second rounds of detection and is not described herein again.

After the PE1 receives the message sent by the CE1, it is detected that the TTL is 3, and the TRACE message is performed by SRv6 encapsulation and is forwarded to the remote PE2. A specific encapsulation behavior includes: first, subtracting 1 from the TTL of the received IPv4 message to set to 2, then encapsulating an SRv6 header in the outer layer of the TRACE message, and setting HL in the IPv6 header as the inner layer TTL, which is 2. The message is forwarded to the P according to SRv6 tunnel forwarding information from the PE1 to the PE2.

After receiving the message forwarded by the PE1, the P detects that the HL in the outer layer encapsulation is 2, and continues to forward the message to the PE2. The inner layer TTL is unchanged, which is still 2. As the transmission of the message encapsulated by the outer layer passes through one node, the outer layer HL minus 1 to set to 1.

After receiving the message forwarded by the P, the PE2 strips the outer layer SRv6 header, and at the same time, the inner layer TTL minus 1 to change to 1, such that the ICMP error response is generated. For the same reason as setting the response message in the first and second rounds of detection, the destination IP of the response message is set as the IP address of the CE1, and the source IP is set as the IP address of the PE2. Furthermore, the PE2 encapsulates a new IPv6 header for the message according to public network SRv6 tunnel information from the PE2 to the PE1, and the outer layer HL is set to 255. Therefore, the message is sent to the P.

The P receives the message sent by the PE2, forwarding is performed in the SRv6 tunnel, and the message is sent to the PE1.

The PE1 receives the message forwarded by the P, strips the outer layer SRv6 header, identifies the destination IP of the inner layer response message as the address of the CE1, and forwards the message to the CE1 by querying private network routing.

The CE1 receives the message forwarded by the PE1. At this point, the CE1 completes the detection of the PE2.

In the fourth round of detection, the CE1 sends the IPv4 TRACE message, a destination IP is set as an IP address of the CE2, and a source IP is set as the IP address of the CE1. Furthermore, for the same reason in the first and second rounds of detection, the TTL is set to 4.

After the PE1 receives the message sent by the CE1, it is detected that the TTL is 4, and the TRACE message is performed by SRv6 encapsulation and is forwarded to the remote PE2. A specific encapsulation behavior includes: first, subtracting 1 from the TTL of the received IPv4 message to set to 3, then encapsulating an SRv6 header in the outer layer of the TRACE message, and setting HL in the IPv6 header as the inner layer TTL, which is 3. The message is forwarded to the P according to SRv6 tunnel forwarding information from the PE1 to the PE2.

After receiving the message forwarded by the PE1, the P forwards the message to the PE2. The inner layer TTL is unchanged, which is still 3, and the outer layer HL minus 1 to set to 2.

After receiving the message forwarded by the P, the PE2 strips the outer layer SRv6 header, and at the same time, the inner layer TTL inherits the HL of the outer layer IPv6 to be set to 2. The PE2 identifies a destination IP of an inner layer TRACE message as the address of the CE2, forwards the message to the CE2 by querying private network routing, and at the same time, the inner layer TTL continues to decrease by 1 to become 1.

After receiving the message forwarded by the PE2, the CE2 generates the ICMP error response. For the same reason as setting the response message in the third rounds of detection, the destination IP is set as the IP address of the CE1, and the source IP is set as the IP address of the CE2. The message is transmitted in a direction of the destination IP, and is first sent to the PE2.

After the PE2 receives the message sent by the CE2, the message encapsulates a new IPv6 header according to the public network SRv6 tunnel information from the PE2 to the PE1, and the outer layer HL is set to 255. Therefore, the message is sent to the P.

The P receives the message sent by the PE2, forwarding is performed in the SRv6 tunnel, and the message is sent to the PE1.

The PE1 receives the message forwarded by the P, strips the outer layer SRv6 header, identifies the destination IP of the inner layer message as the IP address of the CE1, and forwards the message to the CE1 by querying private network routing.

The CE1 receives the message forwarded by the PE1, i.e. the CE1 completes the detection of the CE2.

At this point, through four rounds of detection, the CE1 detects the PE1, P, PE2, and CE2 nodes, i.e. IP addresses of all nodes in the data transmission path from the CE1 to the CE2 are acquired.

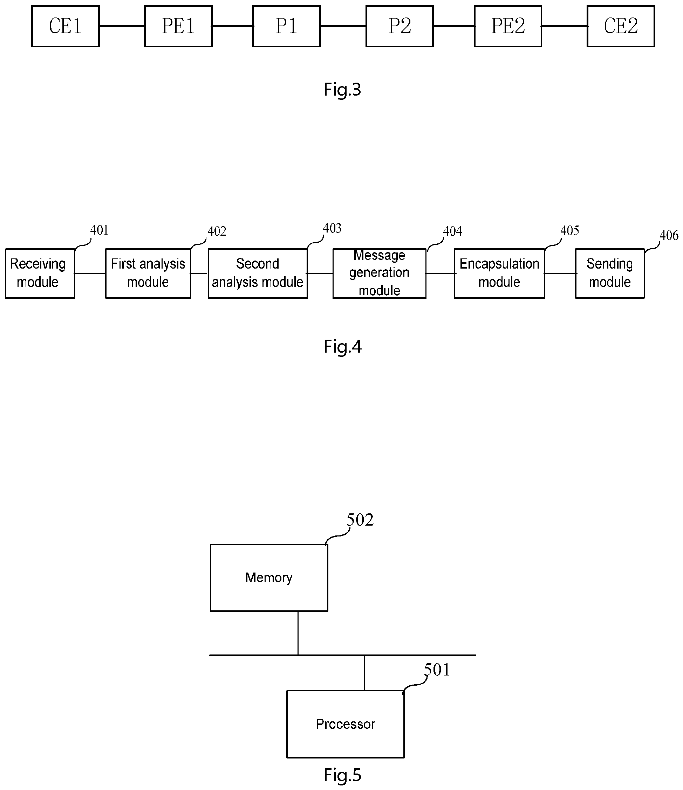

In another specific example, two public network forwarding devices P1 and P2 are deployed between the PE1 and the PE2, and a schematic diagram of a connection structure between the CE1 and the CE2 is shown in Fig. 3. In order to make the CE1 detect the two public network forwarding devices, corresponding adjustment needs to be performed on a detection process. The first round of detection is intended to detect the PE1, and the TRACE message does not pass through the P, such that the first round of detection in this example has the same process as that of the first round of detection in the above example, and is not described herein again.

In the second round of detection, the CE1 sends the IPv4 TRACE message to the CE2, a destination IP is set as an IP address of the CE2, and a source IP is set as the IP address of the CE1. Furthermore, TTL of the TRACE message is set to 2, such that the response error message can be obtained when the TRACE message is transmitted to a second node on the transmission path, and the CE1 can acquire information of the P1 from the response error message. Therefore, through the step same as the second round of detection in the above example, the CE1 completes the detection of the P1.

In the third round of detection, the CE1 sends the IPv4 TRACE message to the CE2, a destination IP is set as an IP address of the CE2, and a source IP is set as the IP address of the CE1. Furthermore, the TTL of the TRACE message is set to 3. When the TRACE message passes through the P1, the HL in the outer layer IPv6 header is not 1, such that the message continues to be transmitted forward, i.e. transmitted to the P2.

The P2 receives the message forwarded by the P1, the HL in the outer layer IPv6 header is detected to be 1, indicating that the last hop has been reached, then the P2 analyzes the message, the inner layer message is identified as the TRACE message, and the inner layer TTL is detected to be 1, such that the ICMP error response is generated. The source IP of the error response message is set as the IP of the sending end of the response message, i.e. an IP address of the P2. In addition, in order to be able to return the error response message to the CE1 to make the CE1 acquire the IP of the P2, the destination IP of the error response message is set as the IP address of the CE1. Then, through the step similar to the above example, the CE1 completes the detection of the P2.

In the fourth and fifth rounds of detection, the TTL of the IPv4 TRACE messages sent to the CE2 by the CE1 are respectively set to 4 and 5. Therefore, the response error message can be obtained when the TRACE message is transmitted to fourth and fifth nodes on the transmission path, such that the CE1 can acquire the IPs of the PE2 and the CE2 from the response error message. Then, through the fourth and fifth rounds of detection, the CE1 completes the detection of the PE2 and the CE2.

The above detection uses the CE1 initiating the IPv4 TRACE message as an example. A person skilled in the art should be able to understand that this detection method is equally applicable to the CE1 initiating the IPv6 TRACE message, and at the same time this detection method is equally applicable to the PE1 initiating the private network TRACE message.

In this implementation, for any public network forwarding device, when the HL value in the outer layer encapsulation of the TRACE message is 1, the TRACE message at an inner layer is analyzed to acquire the source IP carried in the TRACE message, such that the destination IP in the generated response message may be set as the source IP in the TRACE message. Meanwhile, outer layer encapsulation is performed on the response message based on the preset protocol, such that the response message can be transmitted and fed back, based on the preset protocol, to the destination IP in the response message, i.e. the source IP in the TRACE message. Since the source IP in the TRACE message is the IP of the sending end of the TRACE message, the sending end of the TRACE message may analyze, from the response message, i.e. the IP of the public network forwarding device, such that the sending end of the TRACE message detects the public network forwarding device.

An embodiment of the present disclosure relates to a public network forwarding device. As shown in Fig. 4, the device includes a receiving module, a first analysis module, a second analysis module, a message generation module, an encapsulation module, and a sending module.

The receiving module 401 is configured to receive a TRACE message performed by outer layer encapsulation based on a preset protocol.

The first analysis module 402 is configured to analyze an HL value from the outer layer encapsulation of the TRACE message. The preset protocol is a transmission protocol that is supported by a network where the public network forwarding device is located.

The second analysis module 403 is configured to analyze the TRACE message when the HL value indicates that the last hop has been reached, and acquire a source IP carried in the TRACE message.

The message generation module 404 is configured to generate a response message, set a destination IP in the response message as the source IP in the TRACE message, and set a source IP in the response message as an IP of the public network forwarding device.

The encapsulation module 405 is configured to perform outer layer encapsulation on the response message based on the preset protocol, and respectively set the source IP and the destination IP in the outer layer encapsulation of the response message as the source IP and a destination IP in the outer layer encapsulation of the TRACE message.

The sending module 406 is configured to send the response message performed by the outer layer encapsulation.

In an example, the encapsulation module 405 may further be configured to re-perform outer layer encapsulation on the TRACE message based on the preset protocol when the HL value indicates that the last hop is not reached, and subtract 1 from the HL value in the outer layer encapsulation during re-performing of the outer layer encapsulation; and send the TRACE message re-performed by outer layer encapsulation.

In an example, the second analysis module 403 may further be configured to analyze the TRACE message when the HL value indicates that the last hop has been reached and the public network forwarding device is configured to support a mode of analyzing an inner layer message, and acquire the source IP carried in the TRACE message.

In an example, the receiving module 401 may further be configured to receive, from a first side adjacent network device, the TRACE message performed by outer layer encapsulation based on the preset protocol. The first side adjacent network device is another public network forwarding device or a first PE.

In an example, the sending module 406 may further be configured to send the response message performed by the outer layer encapsulation to a second side adjacent network device. The second side adjacent network device is still another public network forwarding device or a second PE.

In an example, the public network forwarding device may further include a forwarding module (not shown in the figure), configured to send the response message performed by outer layer encapsulation to the second side adjacent network device, and then forward the response message to the first side adjacent network device if the second side adjacent network device receives the response message performed by the outer layer encapsulation again based on the preset protocol.

According to the public network forwarding device provided in this implementation, for any public network forwarding device, when the HL value in the outer layer encapsulation of the TRACE message is 1, the TRACE message at an inner layer is analyzed to acquire the source IP carried in the TRACE message, such that the destination IP in the generated response message may be set as the source IP in the TRACE message. Meanwhile, outer layer encapsulation is performed on the response message based on the preset protocol, such that the response message can be transmitted and fed back, based on the preset protocol, to the destination IP in the response message, i.e. the source IP in the TRACE message. Since the source IP in the TRACE message is the IP of the sending end of the TRACE message, the sending end of the TRACE message may analyze, from the response message, i.e. the IP of the public network forwarding device, such that the sending end of the TRACE message detects the public network forwarding device.

It is worth mentioning that, all modules involved in the embodiments of the present disclosure are logical modules. In actual application, a logical unit may be a physical unit, a part of the physical unit, or a combination of a plurality of physical units. In addition, in order to highlight the innovative part of the present disclosure, this implementation does not introduce units that are not closely related to resolving the technical problem proposed by the embodiments of the present disclosure, but this does not mean that there are no other units in this implementation.

An embodiment of the present disclosure further provides a public network forwarding device. As shown in Fig. 5, the device includes: at least one processor 501; and a memory 502 communicatively connected to the at least one processor 501. The memory 502 stores an instruction executable by the at least one processor 501. The instruction is executed by the at least one processor 501, to enable the at least one processor 501 to execute the method for detecting a public network forwarding device.

The memory 502 and the processor 501 are connected by using a bus. The bus may include any number of interconnected buses and bridges. The bus connects various circuits of the one or more processors 501 and the memory 502 together. The bus may also connect various other circuits such as periphery devices, voltage regulators, and power management circuits together, all of which are well known in the art and therefore will not be further described herein. A bus interface provides an interface between the bus and a transceiver. The transceiver may be an element, and may also be a plurality of elements, such as a plurality of receivers and transmitters, so as to provide units for communicating with various other apparatuses on a transmission medium. Data processed by the processor 501 is transmitted on a wireless medium through an antenna. Further, the antenna also receives the data and transmits the data to the processor 501.

The processor 501 is responsible for managing the bus and usual processing, and may also provide a variety of functions including timing, peripheral interfacing, voltage regulation, power management, and other control functions. The memory 502 may be configured to store data used by the processor 501 during execution of operations.

The above products may execute the method provided in the embodiments of the present disclosure, and have the corresponding functional modules and beneficial effects for executing the method, and the technical details not exhaustively described in this embodiment may be referred to the method provided in the embodiments of the present disclosure.

An embodiment of the present disclosure further provides a computer-readable storage medium, storing a computer program. The method for detecting a public network forwarding device is implemented when the computer program is executed by a processor.

It will be appreciated by those skilled in the art that all or part of the steps in the method of the above embodiments may be completed by instructing relevant hardware through a program, which is stored in a storage medium and includes a number of instructions to cause a device (which may be a single-chip microcomputer, a chip, etc.) or processor to execute all or part of the steps of the method described in the embodiments of the present disclosure. The foregoing storage medium includes a USB flash disk, a mobile hard disk drive, a Read-Only Memory (ROM), a Random Access Memory (RAM), and various media that can store program codes, such as a magnetic disk, or an optical disk.

The above embodiments are provided to the person of ordinary skill in the art to realize and use the embodiments of the present disclosure, and the person of ordinary skill in the art may make all kinds of modifications or changes to the above embodiments without departing from the inventive ideas of the embodiments of the present disclosure, and thus the scope of protection of the embodiments of the present disclosure is not limited by the above embodiments, but should be in accordance with the maximum scope of the inventive features mentioned in claims.

## Claims

1. A method for detecting a public network forwarding device, applied to a public network forwarding device and comprising:
receiving a TRACE message performed by outer layer encapsulation based on a preset protocol, and analyzing a Hop Limit (HL) value from the outer layer encapsulation of the TRACE message, wherein the preset protocol is a transmission protocol that is supported by a public network where a public network forwarding device is located;
analyzing the TRACE message when the HL value indicates that the last hop has been reached, and acquiring a source Internet Protocol (IP) carried in the TRACE message;
generating a response message, setting a destination IP in the response message as the source IP in the TRACE message, and setting a source IP in the response message as an IP of the public network forwarding device; and
performing outer layer encapsulation on the response message based on the preset protocol, respectively setting the source IP and the destination IP in the outer layer encapsulation of the response message as the source IP and a destination IP in the outer layer encapsulation of the TRACE message, and sending the response message performed by the outer layer encapsulation.

2. The method according to claim 1, wherein after analyzing the HL value from the outer layer encapsulation of the TRACE message, the method further comprises:
re-performing outer layer encapsulation on the TRACE message based on the preset protocol when the HL value indicates that the last hop is not reached, and subtracting 1 from the HL value in the outer layer encapsulation during re-performing of the outer layer encapsulation; and
sending the TRACE message re-performed by outer layer encapsulation.

3. The method according to claim 1, wherein analyzing the TRACE message if the HL value indicates that the last hop has been reached, and acquiring the source IP carried in the TRACE message comprises:
analyzing the TRACE message when the HL value indicates that the last hop has been reached and the public network forwarding device is configured to support a mode of analyzing an inner layer message, and acquiring the source IP carried in the TRACE message.

4. The method according to claim 1, wherein
receiving the TRACE message performed by outer layer encapsulation based on the preset protocol comprises: receiving, from a first side adjacent network device, the TRACE message performed by outer layer encapsulation based on the preset protocol, wherein the first side adjacent network device is another public network forwarding device or a first Provider Edge (PE); and
sending the response message performed by the outer layer encapsulation comprises: sending the response message performed by the outer layer encapsulation to a second side adjacent network device, wherein the second side adjacent network device is still another public network forwarding device or a second PE.

5. The method according to claim 4, wherein after sending the response message performed by the outer layer encapsulation to the second side adjacent network device, the method further comprises:
forwarding the response message to the first side adjacent network device when the second side adjacent network device receives the response message performed by the outer layer encapsulation again based on the preset protocol.

6. The method according to any one of claims 1 to 5, wherein the source IP carried in the TRACE message is an IP of the PE or an IP of a Customer Edge (CE).

7. The method according to any one of claims 1 to 5, wherein the preset protocol is one of an SRV6 protocol, a VXLAN protocol, and a GRE protocol.

8. A public network forwarding device, comprising:
a receiving module, configured to receive a TRACE message performed by outer layer encapsulation based on a preset protocol;
a first analysis module, configured to analyze a Hop Limit (HL) value from the outer layer encapsulation of the TRACE message, wherein the preset protocol is a transmission protocol that is supported by a network where the public network forwarding device is located;
a second analysis module, configured to analyze the TRACE message when the HL value indicates that the last hop has been reached, and acquire a source Internet Protocol (IP) carried in the TRACE message;
a message generation module, configured to generate a response message, set a destination IP in the response message as the source IP in the TRACE message, and set a source IP in the response message as an IP of the public network forwarding device;
an encapsulation module, configured to perform outer layer encapsulation on the response message based on the preset protocol, and respectively set the source IP and the destination IP in the outer layer encapsulation of the response message as the source IP and a destination IP in the outer layer encapsulation of the TRACE message; and
a sending module, configured to send the response message performed by the outer layer encapsulation.

9. A public network forwarding device, comprising:
at least one processor, and
a memory, communicatively connected to the at least one processor, wherein
the memory stores an instruction executable by the at least one processor, and the instruction is executed by the at least one processor, to cause the at least one processor to perform the method as claimed in any one of claims 1 to 7.

10. A computer-readable storage medium, storing a computer program, wherein the computer program is configured to, when executed by a processor, perform the method as claimed in any one of claims 1 to 7.
